(19) Europäisches Patentamt
European Patent Office
Office européen des brevets

(11) **EP 4 403 260 A1**

(12) **EUROPEAN PATENT APPLICATION**

(43) Date of publication:
**24.07.2024 Bulletin 2024/30**

(21) Application number: **23152222.8**

(22) Date of filing: **18.01.2023**

(51) International Patent Classification (IPC):
**B01J 23/63** (2006.01)     **B01J 23/89** (2006.01)
**B01J 35/04** (2006.01)     **B01J 35/10** (2006.01)
**B01J 37/04** (2006.01)     **B01J 37/02** (2006.01)
**B01D 53/94** (2006.01)     **B01J 21/02** (2006.01)
**C22C 21/00** (2006.01)     **C22C 38/06** (2006.01)
**C22C 5/04** (2006.01)     **C22C 3/00** (2006.01)

(52) Cooperative Patent Classification (CPC):
(C-Sets available)
**B01J 23/63; B01D 53/945; B01J 21/02;
B01J 23/8906; B01J 35/57; B01J 35/615;
B01J 37/0009; B01J 37/0081; B01J 37/0215;
B01J 37/04; C22C 21/00;** B01D 2255/1021;
B01D 2255/1023; B01D 2255/1025;
B01D 2255/2061;          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Johnson Matthey Public Limited
Company
London EC4A 4AB (GB)**

(72) Inventors:
• **KAMEOKA, Satoshi
Sendai
980-8577 (JP)**
• **NAGAOKA, Shuhei
Tochigi
329-1412 (JP)**
• **ZHANG, Xiaorui
Tochigi
329-1412 (JP)**

(74) Representative: **Boult Wade Tennant LLP
Salisbury Square House
8 Salisbury Square
London EC4Y 8AP (GB)**

(54) **CATALYST COMPOSITION COMPRISING AN INTERMETALLIC COMPOUND**

(57)     A catalyst composition comprising an intermetallic compound is disclosed. The intermetallic compound comprises aluminium, a transition metal selected from Fe, Ce, Y, Nb and combinations thereof and preferably yttrium; and a noble metal selected from Pt, Pd, Rh, and combinations thereof and preferably rhodium. The invention further relates to a washcoat comprising the catalyst composition, and a catalyst article comprising the catalyst composition, a method of treating exhaust gas with the catalyst article, a method for manufacturing the catalyst article and systems comprising the catalyst article.

Figure 2(a)

EP 4 403 260 A1

(52) Cooperative Patent Classification (CPC): (Cont.)
B01D 2255/20738; B01D 2255/2092;
B01D 2255/908; B01D 2255/9207;
B01D 2258/014; B01J 2523/00

C-Sets
B01J 2523/00, B01J 2523/31, B01J 2523/36,
B01J 2523/822;
B01J 2523/00, B01J 2523/31, B01J 2523/822,
B01J 2523/842;
B01J 2523/00, B01J 2523/31, B01J 2523/824,
B01J 2523/842;
B01J 2523/00, B01J 2523/31, B01J 2523/828,
B01J 2523/842

**Description**

**Field of the Invention**

THIS INVENTION relates to a composition for the manufacture of a three-way catalyst for treating exhaust gas from an internal combustion engine. The present invention extends to a washcoat comprising the catalyst composition, and a catalyst article comprising the catalyst composition. The invention further extends to a method of manufacturing the catalyst article, a method of treating exhaust gas with the catalyst article, and systems comprising the catalyst article.

**Background of the Invention**

Three-way catalysts (TWCs) are conventionally used to convert carbon monoxide (CO), hydrocarbons (HC), and nitrogen oxides ($NO_x$) found in the exhaust gases of gasoline fuelled internal combustion engines. These contaminants are harmful substances, and their emission is strictly controlled by environmental regulations around the world.

Three-way catalysts treat exhaust gases by simultaneously oxidising carbon monoxide and hydrocarbons and reducing nitrogen oxides. Conventional three-way catalysts typically comprise a noble metal (such as platinum, rhodium, palladium, iridium, or ruthenium) on a catalyst support. The catalyst support typically comprises a porous refractory oxide, for example, an alumina, a silica, or a ceria. The supported catalyst may then be applied to a substrate, or extruded, to form a catalyst article.

Three-way catalysts, like other exhaust gas catalysts, typically achieve very high efficiencies once they reach their operating temperature (typically, 200°C and higher). However, these catalysts may be relatively inefficient below their operating temperature, i.e., during the cold start stage. The activity of a three-way catalyst may be measured in terms of "light-off temperature". Improved light-off performance may be indicative of improved performance below during the cold start stage.

The term "light-off temperature" as used herein will be understood to refer to the temperature at which 50% catalytic conversion is achieved and is synonymous with "$T_{50}$". It will be understood that the light-off temperature for different components in an exhaust gas may be different from one another. For example, a catalyst's light-off temperature for carbon monoxide may be different from its light-off temperature for nitrogen oxides.

TWCs can be exposed to extremely high temperatures of 800-1000°C during thermal ageing. Exposure to these temperatures leads to severe sintering phenomena. This can cause a number of issues that affect TWC performance: loss of surface area, loss of available reactive oxygen within the catalyst support lattice, and further sintering of the noble metal. A TWC with improved thermal stability is therefore desired. Conventional methods used in respect of TWCs to improve thermal stability include using ceria-zirconia or the addition of other "promoter" elements, such as alkaline earth metals or any of the trivalent rare earth metals.

Due to an increase in PGM commodity prices, a TWC with a reduced noble metal loading is desired. TWC with reduced metal loadings are often associated with poor emission control performance and poor thermal stability.

Accordingly, it is an object of the present invention to provide a catalyst article which achieves improved thermal stability and improved light-off performance. It is also an objective of the present invention to provide improved CO, HC and $NO_x$ emission control performance at a significantly reduced noble metal loading.

**Summary of the Invention**

The present inventors have found that the presence of an intermetallic compound comprising at least a transition metal selected from Fe, Ce, Y, Nb and combinations thereof, and a noble metal selected from Pt, Pd, Rh and combinations thereof, in a catalyst composition provides improved thermal stability and improved light-off performance results. The presence of the above intermetallic compound in a catalyst composition also results in improved CO, HC and $NO_x$ emission control performance at a significantly reduced noble metal loading when the composition is used in the manufacture of a catalyst article.

According to a first aspect, there is provided a catalyst composition comprising an intermetallic compound, wherein the intermetallic compound comprises:

a transition metal selected from Fe, Ce, Y, Nb and combinations thereof; and
a noble metal selected from Pt, Pd, Rh and combinations thereof.

Preferably, the intermetallic compound has a formula according to Formula I:

$$Al_a\text{-}X_b\text{-}PGM_c \qquad \text{Formula I}$$

in which:

$$a = 100 - b - c;$$

$$25 \leq a < 80;$$

$$20 < b < 75;$$

$$0 < c < 5.0;$$

wherein a, b and c are atomic weight percentages;
wherein X is the transition metal selected from Fe, Ce, Y, Nb and combinations thereof; and
wherein PGM is the noble metal selected from Pt, Pd, Rh and combinations thereof.

According to a second aspect of the invention there is provided a washcoat composition comprising a catalyst composition according to the first aspect of the invention and a liquid medium.

A third aspect of the invention provides a catalyst article comprising a substrate and a catalyst composition according to the first aspect of the present invention.

A fourth aspect of the invention provides a method of making a catalyst article of the third aspect of the invention, comprising the step of coating a substrate with a washcoat composition according to the second aspect of the invention.

A fifth aspect of the invention provides an emission treatment system for treating a flow of a combustion exhaust gas comprising the catalyst article according to the third aspect.

A sixth aspect of the invention provides a method of treating an exhaust gas from an engine, comprising contacting the exhaust gas with a catalyst article according to the third aspect.

Detailed Description

Preferred and/or optional features of the invention will now be set out. Any aspect of the invention may be combined with any other aspect of the invention unless the context demands otherwise. Any of the preferred and/or optional features of any aspect may be combined, either singly or in combination, with any aspect of the invention unless the context demands otherwise.

The present invention is directed to the catalytic treatment of combustion exhaust gas, such as that produced by gasoline and other engines, and to related catalysts compositions, catalytic articles, and systems. More specifically, the invention relates to the simultaneous treatment of $NO_x$, CO, and HC in a vehicular exhaust system.

The first aspect provides a catalyst composition comprising an intermetallic compound, wherein the intermetallic compound comprises:

a transition metal selected from Fe, Ce, Y, Nb and combinations thereof; and
a noble metal selected from Pt, Pd, Rh and combinations thereof.

As a skilled person would understand, the term "intermetallic compound" refers to a compound formed by at least two metals, and which has, at least partly, an ordered crystal structure which differ from the crystal structures of its constituting elements (metals). Without wishing to be bound to a specific theory, it is believed that the particular combination of electronic and crystal structure of an intermetallic compound, leads to chemical potentials of the elements not easily obtained in other compounds. The chemical potential results to a large extent from the electron transfer between the constituting elements of the intermetallic compound.

The intermetallic compound of Al-X serves as PGM platform in which PGM atoms can be homogeneously dispersed.

Preferably, the intermetallic compound may have a formula according to Formula I defined above.

In Formula I, a, b and c indicate atomic weight percentages based on total metal content of the intermetallic compound.

In Formula I, X represents the transition metal and may be selected from Fe, Ce, Y, Nb and a combination thereof. Preferably, X is Fe or Y. Most preferably, X may be Y.

In Formula I, PGM represents the noble metal and may be selected from Pt, Pd, Rh and a combination thereof.

Preferably, PGM is Rh.

In Formula I, $25 \leq a < 80$, such as $60 < a < 80$, for example $a = 75$. It may be preferred that $74 \leq a \leq 76$. It may be more preferred that $74.5 \leq a \leq 75.5$.

In Formula I, $20 < b < 75$ such as $20 < b \leq 40$ or $20 < b \leq 35$. It may be preferred that $20 < b \leq 25$. It may be preferred that b is between 24 and 25.

In Formula I, $0 < c < 5.0$, such as $0.2 \leq c < 3.0$. It may be preferred that c is greater than or equal to 0.5, or greater than or equal to 0.6. It may be preferred that c is less than or equal to 1.0, or less than or equal to 0.7. It may be preferred that c is $0.2 \leq c \leq 0.5$. It may be preferred that c is about 0.5.

As demonstrated in the examples, the provision of intermetallic compounds having formulas such as $Al_{74.8}Y_{25}Rh_{0.2}$, $Al_{74.5}Y_{25}Rh_{0.5}$ and $Al_{74.0}Y_{25}Rh_{1.0}$, give rise to catalyst articles with improved performance. In particular, the abovementioned intermetallic compounds give rise to improved thermal stability after aging of the catalyst article. Moreover, it has been found that these catalyst articles demonstrate improved performance at significantly reduced noble metal loadings. This is particularly advantageous as conventional TWCs do not typically perform well at reduced noble metal loadings.

The term "noble metal loading" as used herein refers to a measurement in units of $g/ft^3$ on a metal weight basis.

Various techniques may be used to prepare the intermetallic compound according to the invention. A powder metallurgical method, such as annealing for an appropriate time in an inert crucible and atmosphere to reach thermodynamic equilibrium, may be preferred.

The intermetallic compound may be prepared according to the method described hereinbelow.

An intermetallic compound according to the present invention is prepared by melting metallic Al, X and PGM particles in a furnace, such as an electric Arc furnace, under an atmosphere of Ar gas. The melting of the particles may be repeated several times, for example 5 times. The molten material may be annealed at 800°C for 48 hours in vacuum conditions. The annealed material may then be allowed to cool down to room temperature and may subsequently be crushed to the desired particle size in a mill. The type of mill is not particularly limited and may be selected by the person skilled in the art, for example the mill may suitably be a ball mill.

Optionally, the intermetallic compound particles obtained from the method described above (also referred to as unleached intermetallic compound particles), may be further subjected to a leaching step to obtain leached intermetallic compound particles. The intermetallic compound particles may be leached in a suitable leaching solution. Preferably, the intermetallic compound particles may be leached in a 10 wt% NaOH aqueous solution or in a 10 wt% a $Na_2CO_3$ aqueous solution for 24 hours at room temperature. The leached intermetallic compound particles may be filtered and thoroughly washed with distilled water until a pH 7 was measured. The washed particles may then be dried at 313K (40 °C) for 12 hours.

In particular, Al, or substantially Al, may be leached from the intermetallic compound of Formula I. It may be preferable to leach at least 40% of the Al present in the unleached intermetallic compound particles. It may be more preferable to leach at least 50% of the Al present in the unleached intermetallic compound particles. It may be even more preferable to leach at least 60 wt% of the Al present in the unleached intermetallic compound particles, such as at least 64 wt% of the Al. It may be most preferred to leach all, or substantially all of the Al present in the unleached intermetallic compound particles, thereby leaving monodispersed PGM supported on X oxide, such as $Rh/Fe_2O_3$, or $Pt/Fe_2O_3$, $Rh/Y_2O_3$ etc.

Leaching of the intermetallic compound increases the specific surface area of the intermetallic compound. The specific surface area of the intermetallic compound may be determined by Brunauer-Emmett-Teller (BET) methods. Preferably, the BET specific surface area may be from about 90 $m^2/g$ to about 160 $m^2/g$, more preferably from about 100 $m^2/g$ to about 160 $m^2/g$, even more preferably from about 120 $m^2/g$ to about 150 $m^2/g$.

The amount of intermetallic compound present in the catalyst composition may be such that the catalyst composition has a noble metal loading of between 0.5 to 5 $g/ft^3$, preferably of between 0.5 to 4 $g/ft^3$, even more preferably of between 0.5 to 3 $g/ft^3$, such as 0.5 to 2 $g/ft^3$. The noble metal loading of the catalyst composition may be 2.0 $g/ft^3$.

The composition may comprise an oxygen storage component and/or an inorganic oxide.

The oxygen storage component may be cerium oxide, zirconium oxide, a ceria-zirconia mixed oxide, an alumina-ceria-zirconia mixed oxide, or a combination thereof. More preferably, the oxygen storage component may comprise the ceria-zirconia mixed oxide, the alumina-ceria-zirconia mixed oxide or a combination thereof. The ceria-zirconia mixed oxide may further comprise dopants, such as lanthanum, neodymium, praseodymium, yttrium oxides, etc. In some embodiments, the oxygen storage component may comprise the ceria-zirconia mixed oxide and the alumina-ceria-zirconia mixed oxide.

The oxygen storage component may be present in the catalyst composition in an amount of between 20 to 80 wt%, preferably in an amount of between 20 to 60 wt%, more preferably in an amount of between 20 to 50 wt%, relative to other components in a catalyst composition.

The inorganic oxide may be a doped or non-doped alumina, a doped or non-doped silica, a doped or non-doped ceria, or a doped or non-doped ceria-zirconia. Preferably the inorganic oxide is a lanthanum doped alumina (e.g.,

lanthanum stabilised alumina), wherein lanthanum is up to 10 wt%, preferably, 2 to 8, 3 to 7, or 4 to 6 wt% of the inorganic oxide. It will be understood that the inorganic oxide is different to the oxygen storage component.

The inorganic oxide may be present in the catalyst composition in an amount of between 20 to 80 wt%, preferably in an amount of between 40 to 80 wt%, more preferably to in an amount of between 50 to 80 wt%, relative to other components in a catalyst composition.

The leached or unleached intermetallic compound particles, the oxygen storage component and the inorganic oxide may be combined to obtain the catalyst composition according to the first aspect of the invention.

The catalyst composition may optionally comprise a group 1 or a group 2 metal. In particular, the catalyst composition may comprise one or more metals selected from magnesium, calcium, strontium, and barium. Preferably, the catalyst composition comprises barium. The group 1 or the group 2 metal may be supported on the oxygen storage component and/or the inorganic oxide.

The catalyst composition of the invention may be a catalyst composition for use as a three-way catalyst for treating a flow of a combustion exhaust gas by simultaneously oxidising carbon monoxide and hydrocarbons and reducing nitrogen oxides.

The catalyst composition may be applied to a substrate in the form of a washcoat. Accordingly, a further aspect of the present invention provides a washcoat comprising the catalyst composition of the first aspect and a liquid medium.

The washcoat typically has a solids content of from 20 to 45 wt%, for example 20 to 35 wt%, or about 25 wt%.

The washcoat may be prepared according to the method described hereinbelow.

The method for producing the washcoat may comprise the step of forming a slurry of the oxygen storage component. The slurry of the oxygen storage component may be prepared by suspending the oxygen storage component in a liquid medium, for example in deionised water.

The method for producing the washcoat may comprise the step of adding the leached or unleached intermetallic compound (also referred to herein as an intermetallic compound precursor) to the slurry of the oxygen storage component. The skilled person will be able to select alternative intermetallic compounds of Formula I according to the desired noble metal loading. The method for producing the washcoat may comprise the step of adding an inorganic oxide to the slurry.

The viscosity and rheology of the washcoat may be adjusted using additives known in the art.

Additives may be added in an ageing step prior to coating the washcoat onto a substrate.

The formulation of the intermetallic compound and the amount of the intermetallic compound added to form the composition used to form the washcoat can be selected by the skilled person depending upon the amount of the desired noble metal loading in a catalyst article.

It was found that a catalyst article according to the present invention displays improved thermal stability at aged conditions and improved light-off performance at a significantly reduced noble metal loading in the catalyst. Accordingly, in another aspect of the present invention there is provided a catalyst article, suitable for the treatment of exhaust gas an internal combustion engine, comprising a substrate to which the catalyst composition of the first aspect has been applied.

The substrate may be a flow-through monolith. Alternatively, the substrate can be a wall-flow filter.

The flow-through monolith substrate has a first face and a second face defining a longitudinal direction there between. The flow-through monolith substrate has a plurality of channels extending between the first face and the second face. The plurality of channels extends in the longitudinal direction and provide a plurality of inner surfaces (e.g. the surfaces of the walls defining each channel). Each of the plurality of channels has an opening at the first face and an opening at the second face. For the avoidance of doubt, the flow-through monolith substrate is not a wall flow filter.

The first face is typically at an inlet end of the substrate and the second face is at an outlet end of the substrate.

The channels may be of a constant width and each plurality of channels may have a uniform channel width.

Preferably within a plane orthogonal to the longitudinal direction, the monolith substrate has from 300 to 900 channels per square inch, preferably from 400 to 800. For example, on the first face, the density of open first channels and closed second channels is from 600 to 700 channels per square inch. The channels can have cross sections that are rectangular, square, circular, oval, triangular, hexagonal, or other polygonal shapes.

The monolith substrate acts as a support for holding catalytic material. Suitable materials for forming the monolith substrate include ceramic-like materials such as cordierite, silicon carbide, silicon nitride, zirconia, mullite, spodumene, alumina-silica magnesia or zirconium silicate, or of porous, refractory metal. Such materials and their use in the manufacture of porous monolith substrates are well known in the art.

It should be noted that the flow-through monolith substrate described herein is a single component (i.e. a single brick). Nonetheless, when forming an emission treatment system, the substrate used may be formed by adhering together a plurality of channels or by adhering together a plurality of smaller substrates as described herein. Such techniques are well known in the art, as well as suitable casings and configurations of the emission treatment system.

In embodiments wherein the catalyst article of the present invention comprises a ceramic substrate, the ceramic substrate may be made of any suitable refractory material, e.g., alumina, silica, ceria, zirconia, magnesia, zeolites, silicon nitride, silicon carbide, zirconium silicates, magnesium silicates, aluminosilicates and metallo aluminosilicates (such as cordierite and spodumene), or a mixture or mixed oxide of any two or more thereof. Cordierite, a magnesium aluminosilicate, and silicon carbide are particularly preferred.

In embodiments wherein the catalyst article of the present invention comprises a metallic substrate, the metallic substrate may be made of any suitable metal, and in particular heat-resistant metals and metal alloys such as titanium and stainless steel as well as ferritic alloys containing iron, nickel, chromium, and/or aluminium in addition to other trace metals.

In another aspect of the invention there is provided a method for producing a catalyst article comprising the catalyst composition of the first aspect, comprising the step of applying the washcoat of the second aspect to a substrate.

The method of producing a catalyst article may comprise the steps described above in relation to preparing a washcoat of the second aspect of the invention.

The method may comprise the step of coating the washcoat onto a substrate to form a coated substrate. The washcoat may be coated on to a substrate by any method known in the art. The amount of washcoat coated onto the substrate may be determined based upon the desired noble metal component loading on the catalyst article. The washcoat may be coated onto the substrate in one or more coating steps.

Optionally, the method may comprise the step of drying the coated substrate to form a dried coated substrate.

The method may comprise the step of calcining the coated substrate. The step of calcining the coated substrate may be carried out on a substrate which has been optionally dried, or on the coated substrate after coating. Typically, the coated substrate is calcined at a temperature in the range of 450 to 600 °C for a period of up to 2 hours. Suitably, the coated substrate is calcined in a furnace under an atmosphere of air.

It will be appreciated that the steps recited above may be performed in any suitable order and/or that some steps may be combined into a single step. For example, the drying and calcining steps may be combined.

The method for producing a catalyst article according to the invention may comprise the steps of:

(i) Forming a washcoat comprising the catalyst composition of Formula I;
(ii) applying the washcoat formed in step (i) to a substrate to form a coated substrate;
(iii) optionally, drying the coated substrate to form a dried coated substrate; and
(iv) calcining the dried coated substrate to form the catalyst article.

According to a further aspect of the invention there is provided an exhaust system comprising a catalyst article of the third aspect of the invention.

In a further aspect of the invention there is provided a method of treating an exhaust gas from an engine comprising contacting the exhaust gas with a catalyst article according to the third aspect.

## Figures

The invention will now be described further in relation to the following non-limiting figures.

Figure 1(a)    shows carbon monoxide (CO) conversion (%) as a function of temperature of catalysts according to the invention, wherein the catalysts comprise Rh, Pt and Pd, respectively.

Figure 1(b)    shows nitrogen oxides ($NO_x$) conversion (%) as a function of temperature of the catalysts of Figure 1(a).

Figure 1(c)    shows total hydrocarbon (THC) conversion (%) as a function of temperature of the catalysts of Figure 1(a).

Figure 2(a)    shows total hydrocarbon (THC) conversion (%) at 600°C at fresh and aged conditions of Catalyst Article 4 and Comparative Catalysts A to C.

Figure 2(b)    shows total nitrogen oxides ($NO_x$) conversion (%) at 600°C at fresh and aged conditions of Catalyst Article 4 and Comparative Catalysts A to C.

Figure 3(a)    shows total hydrocarbon (THC) conversion (%) at 600°C at fresh and aged conditions the leached and unleached catalyst articles of Figure 3(a).

Figure 3(b)    shows total nitrogen oxides ($NO_x$) conversion (%) at 600°C at fresh and aged conditions the leached and unleached catalyst articles of Figure 3(a).

Figure 4(a)    shows total hydrocarbon (THC) conversion (%) at 600°C at fresh and aged conditions of the catalyst articles of Figure 4(a).

Figure 4(b)    shows total nitrogen oxides ($NO_x$) conversion (%) at 600°C at fresh and aged conditions of the catalyst articles of Figure 4(a).

## Examples

The invention will now be described further in relation to the following non-limiting examples.

*Example 1 - PGM selection of intermetallic compound*

Catalyst Articles 1 to 3 were prepared with catalyst compositions comprising different intermetallic compounds as shown in **Table 1:**

**Table 1**

|  | Intermetallic compound | PGM loading |
|---|---|---|
| **Catalyst Article 1** | $Al_{74.3}Fe_{22.8}Rh_{2.9}$ | 2.6 g/ft$^3$ Rh |
| **Catalyst Article 2** | $Al_{74.3}Fe_{22.8}Pt_{2.9}$ | 2.6 g/ft$^3$ Pt |
| **Catalyst Article 3** | $Al_{74.3}Fe_{22.8}Pd_{2.9}$ | 2.6 g/ft$^3$ Pd |

The different intermetallic compounds listed in **Table 1** were prepared using a similar method.

The intermetallic compounds were prepared using an electric arc furnace under an atmosphere of Ar. The alloy samples were annealed at 1100K (827°C) for 48 hours in vacuum and subsequently crushed to a particle size of <75 μm in a ball mill.

Catalyst compositions were prepared by the following method:

The catalyst composition may be applied to a substrate in the form of a washcoat comprising the catalyst composition of the first aspect and a liquid medium. The washcoat may be prepared according to the method described hereinbelow.

Pre-prepared inorganic oxide of lanthanum doped alumina was added to deionised water to form a slurry. To the slurry was added an intermetallic compound precursor obtained from the method described above. The resulting mixture was homogenised by stirring. A base or acid was slowly added to adjust pH in the range of about 6.0 to 7.0.

A thickening agent was added to the slurry, which was then aged to produce a washcoat suitable for coating a substrate.

The washcoat was applied to the substrate by pulling the washcoat through the channels under vacuum. The substrate was a standard cordierite foil, having a cell density of 400 cells per square inch (cpsi), an axial length of 5.00 cm and a width of 2.54 cm.

The coated substrate was then dried and calcined.

For Catalyst Articles 1 to 3, the light-off temperatures for each of carbon monoxide, nitrogen oxide, and hydrocarbons were determined using a Synthetic Catalyst Activity Test (SCAT) rig using the gas compositions shown in **Table 2** under stoichiometric conditions.

**Table 2**

|  | $C_3H_6$ | O2 | NO | CO | $H_2$ | $CO_2$ | $H_2O$ | $N_2$ |
|---|---|---|---|---|---|---|---|---|
|  | (ppmC) | (vol%) | (ppm) | (vol%) | (vol%) | (vol%) | (vol%) | (vol%) |
| **Stoichiometric conditions** | 1260 | 0.53 | 1000 | 0.6 | 0.2 | 15.00 | 10.00 | Balance |

Under the gas composition above, the catalyst articles were heated to 400 °C at a rate of 20°C per minute and held at this temperature for 5 minutes. The temperature was decreased to 100°C. Light-off temperatures were measured for each catalyst article under a gas flow rate of 40 litres per minute.

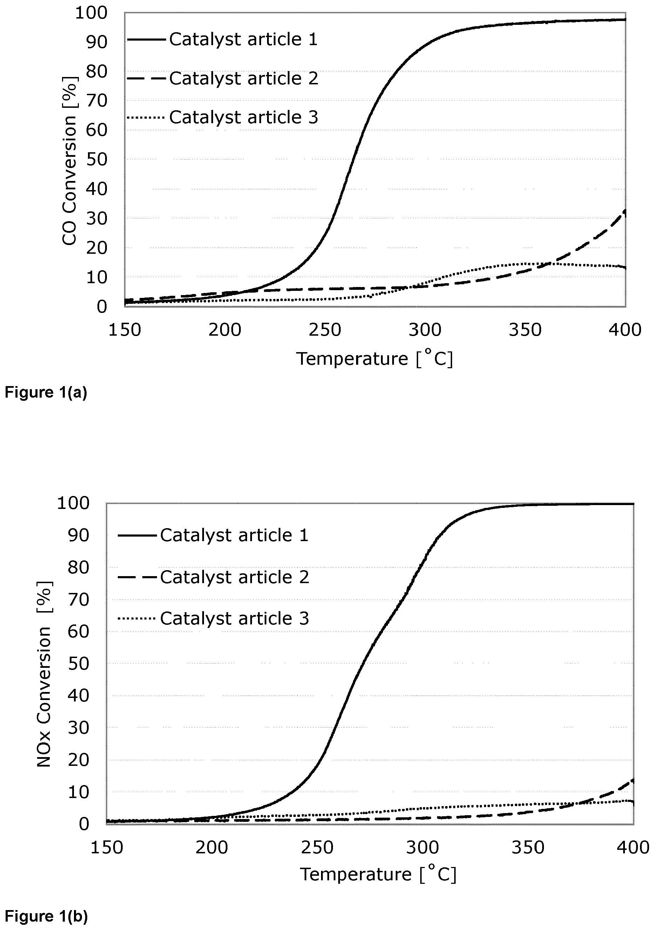

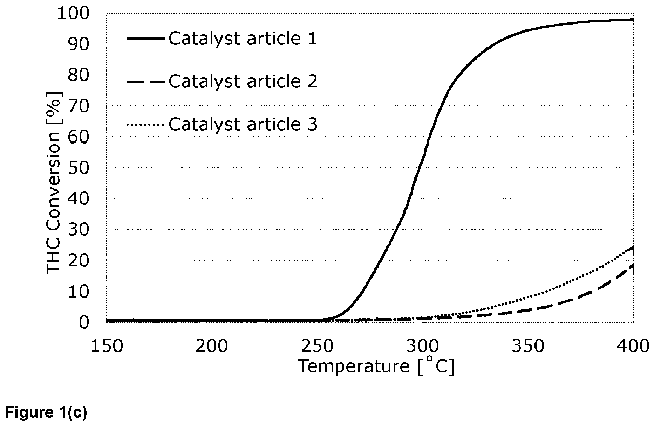

Complete light-off curves for carbon monoxide, hydrocarbons, and nitrogen oxides are shown in Figures 1(a), (b) and (c). From these figures, it can be seen that Catalyst Article 1 which was prepared with the intermetallic compound comprising Rh, achieves significantly higher conversions than Catalyst Articles 2 and 3, which comprise Pt and Pd, respectively.

*Example 2: Performance comparison of a catalyst article according to the invention and conventional catalysts at Rh loading of 0.5 g/ft$^3$*

Comparative Catalyst A

Comparative Catalyst A is a single-layered TWC coated on a ceramic substrate (400 cpsi, 4.0 mil wall thickness). The catalyst layer consists of Rh supported on a washcoat of La-stabilized alumina and Nd-stabilized ceria zirconia where Rh was prefixed on the alumina support. The Rh loading of Comparative Catalyst A is 0.5 g/ft$^3$.

The method for producing a washcoat for Comparative Catalysts A to D is similar to the method for producing a washcoat according to the present invention as described above. However, the method differs from the method of the present invention in that a noble metal source is added to the slurry of the oxygen storage component instead of an intermetallic compound precursor. Suitably, the noble metal source may be added to the slurry as one or more soluble compounds of the desired noble metals in solution. Suitably, the noble metal source may be provided as nitrates of the noble metal in an aqueous solution, for example the noble metal source is added as rhodium nitrate in the preparation of Comparative Catalyst D.

Comparative Catalyst B

Comparative Catalyst B is a single-layered TWC coated on a ceramic substrate (400 cpsi, 4.0 mil wall thickness). The catalyst layer consists of Rh supported on a washcoat of Y-doped La-stabilized alumina and Nd-stabilized ceria zirconia where Rh was prefixed on the alumina support. The Y-doped La-stabilized alumina was prepared by a wetness impregnation method by using an aqueous Y nitrate solution. The Y concentration is the same as the following Catalyst Article 4. The Rh loading of Comparative Catalyst B is 0.5 g/ft$^3$.

Comparative Catalyst C

Comparative Catalyst C is a single-layered TWC coated on a ceramic substrate (400 cpsi, 4.0 mil wall thickness). The catalyst layer consists of Rh supported on a washcoat of yttrium oxide, La-stabilized alumina and Nd-stabilized ceria zirconia where Rh was prefixed on the yttrium oxide support. The Y concentration in the whole washcoat is the same as the following Catalyst Article 4. The Rh loading of Comparative Catalyst C is 0.5 g/ft$^3$.

Catalyst Article 4

An intermetallic compound of general formula $Al_{74.5}$-$Y_{25}$-$Rh_{0.5}$ was prepared by using a similar method as described above.

Catalyst Article 4 with a Rh loading of 0.5 g/ft$^3$ was prepared by following a similar method as described above in respect of Catalyst Articles 1 to 3. The Al-Y-Rh intermetallic compound precursor was mixed with La-stabilized alumina and Nd-stabilized ceria zirconia. The Y concentration in the whole washcoat is the same as Comparative Catalysts B and C.

Comparative Catalysts A to C and Catalyst Article 4 were tested separately over a SCAT rig as described above after hydrothermal aging for 4 hours at 1000 °C under air with 10% steam. Light-off temperatures were measured with a heating rate of 30°C/min under reaction gas condition in **Table 2.**

The HC, CO and NO$_x$ conversion at 600 °C of the aged Comparative Catalysts A to C and Catalyst Article 4 are shown in **Table 3.** The data indicate that, surprisingly, Catalyst Article 4 of the present invention gave significantly improved light-off performance when compared with Comparative Catalysts A to C for the conversion of THC and NO$_x$. It can be seen that Catalyst Article 4 achieved significantly higher conversions of THC and NO$_x$ compared to Comparative Catalysts A to C at the same temperature . This invention can save precious natural resource as a reduced noble metal loading can be used to provide cleaner-air environment through significant performance improvement of TWC to reduce air-pollutions by automobiles.

**Table 3**

| | Rh Loading (g/ft$^3$) | Conversion at 600°C (%) | | |
|---|---|---|---|---|
| | | CO | HC | NO$_x$ |
| **Comparative Catalyst A** | 0.5 | 38.1 | 27.6 | 8.6 |
| **Comparative Catalyst B** | 0.5 | 38.5 | 22.3 | 6.2 |
| **Comparative Catalyst C** | 0.5 | 31.7 | 23.3 | 8.3 |
| **Catalyst Article 4** | 0.5 | 30.8 | 65.6 | 19.8 |

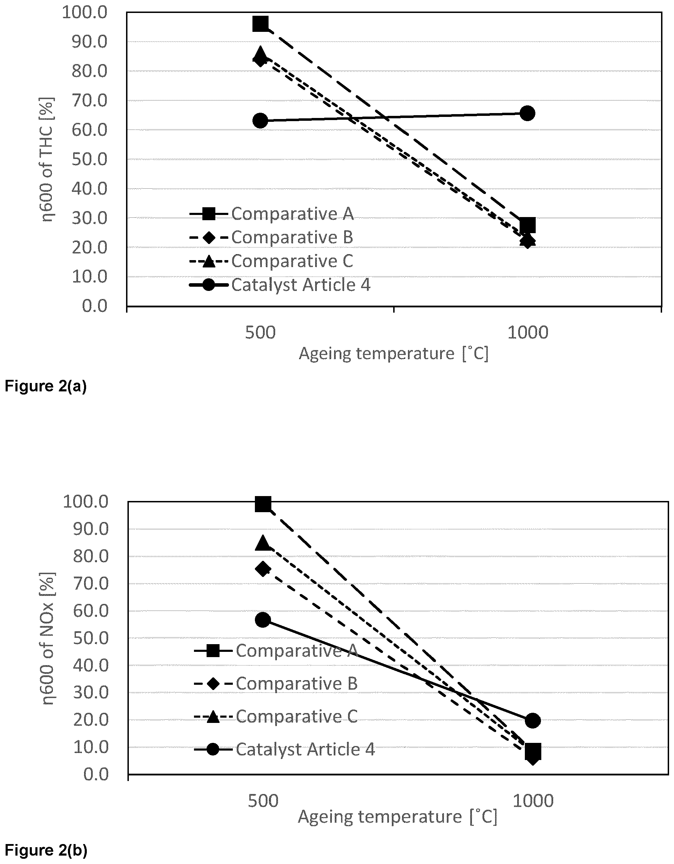

It was also surprisingly found that Catalyst Article 4 has a significantly improved thermal stability at a Rh loading of 0.5 g/ft$^3$ compared to conventional catalyst materials at the same Rh loading. This effect is shown in Figures 2(a) and 2(b) where, after harsh lean aging at 1000°C, the conversion of THC and NO$_x$ at 600°C achieved by Catalyst 4 is higher than that achieved by Comparative Catalysts A to C.

Figures 2(a) and (b) show THC and $NO_x$ conversion results at 600°C at a fresh condition and at an aged condition. The aging comprises harsh lean aging at 1000°C for 4 hours under air with 10% steam.

*Example 3 - Effect of leaching on a catalyst article comprising*

Catalyst Article 5

An intermetallic compound of general formula $Al_{74.5}$-$Y_{25}$-$Rh_{0.5}$ was prepared by using a similar method as described above.

Catalyst Article 5 with a Rh loading of 2.0 g/ft$^3$ was prepared by following a similar method as described above in respect of Catalyst Article 4.

Catalyst Article 6

The crushed intermetallic particles formed in the preparation of Catalyst Article 5 were leached in 10 wt% $Na_2CO_3$ aqueous solution for 24 hours at room temperature. The leached intermetallic particles were washed with distilled water until a pH~7 was measured. The particles were then dried at 313 K (40 °C) for 12 hours. The leached intermetallic compound particles were used to prepare Catalyst Article 6 with a Rh loading of 2.0 g/ft$^3$ by following a similar method as described above in respect of Catalyst Articles 4 and 5.

The surface area of Catalyst Articles 5 and 6 were measured by using a BET method. The surface area measurements are shown in **Table 4.** Leaching of the intermetallic compound particles has significantly increased the surface area of Catalyst Article 6 compared to Catalyst Article 5 which was prepared from an intermetallic compound having the same composition, but which was not leached.

**Table 4**

|  | BET Surface Area (m$^2$/g) |
|---|---|
| **Catalyst Article 5** | 1.0 |
| **Catalyst Article 6** | 142.6 |

Light-off test results were obtained for total hydrocarbons, and nitrogen oxides after harsh lean 1000°C, 4 hour aged under 10% steam-air balance. These results were obtained under the same conditions set out in **Table 2** and by following a similar method as described above in Example 2. The light-off test results are shown in **Table 5.**

Leaching the intermetallic compound results in superior conversion of total hydrocarbons and nitrogen oxides at harsh lean aged conditions.

**Table 5**

|  | Rh Loading (g/ft$^3$) | Conversion at 600°C (%) | |
|---|---|---|---|
|  |  | HC | NOx |
| **Catalyst Article 5** | 2.0 | 27.2 | 9.2 |
| **Catalyst Article 6** | 2.0 | 71.8 | 48.2 |

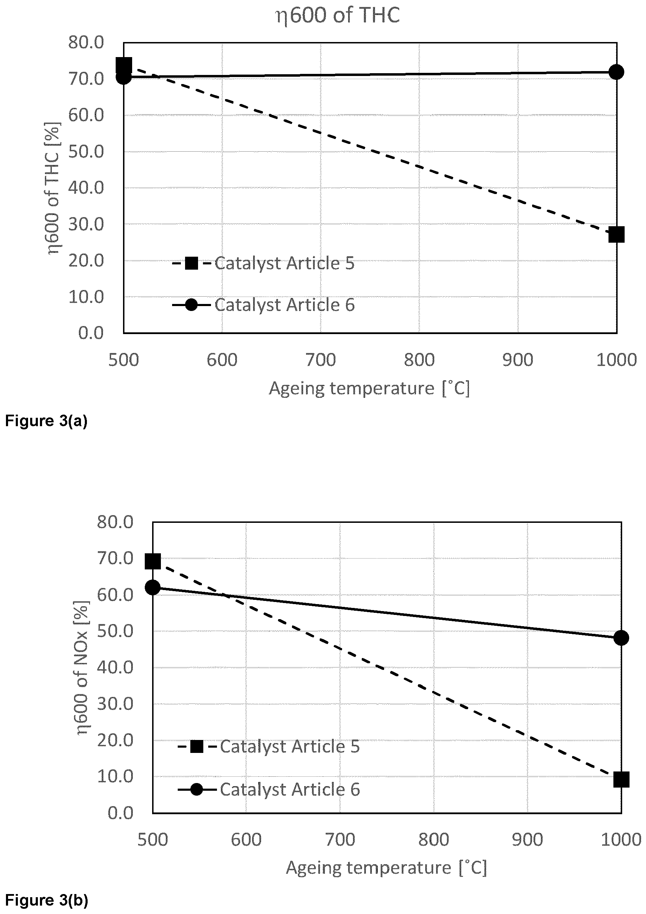

It was also found that Catalyst Article 6 has a significantly improved thermal stability compared to Catalyst Article 5. This effect is shown in Figures 3(a) and 3(b) where, after harsh lean aging at 1000°C, the conversion of THC and $NO_x$ at 600°C achieved by Catalyst Article 6 is higher than that achieved by Catalyst Article 5. It was therefore surprisingly found that leaching of the intermetallic compound results in improved thermal stability of the catalyst article.

*Example 4 - Effective range of Rh content in intermetallic compound according to the invention*

Comparative Catalyst D was prepared using a Rh precursor and Catalyst Articles 7 to 9 were prepared using intermetallic compounds according to the invention. The formulations for the Rh precursor and the respective intermetallic compounds used are shown in **Table 6.**

**Table 6**

|  | Formulation | Rh loading |
|---|---|---|
| **Comparative Catalyst D** | [Y, La-doped alumina. Rh-N + Nd, La-stabilized Ce/ZrO$_x$] | 2.0 g/ft$^3$ |
| **Catalyst Article 7** | [Al$_{74.8}$-Y$_{25}$-Rh$_{0.2}$ + La-doped alumina + Nd, La-stabilized Ce/ZrO$_x$] | 2.0 g/ft$^3$ |
| **Catalyst Article 8** | [Al$_{74.5}$-Y$_{25.0}$-Rh$_{0.5}$ + La-doped alumina + Nd, La-stabilized Ce/ZrO$_x$] | 2.0 g/ft$^3$ |
| **Catalyst Article 9** | [Al$_{74.0}$-Y$_{25.0}$-Rh$_{1.0}$ + La-doped alumina + Nd, La-stabilized Ce/ZrO$_x$] | 2.0 g/ft$^3$ |

Comparative Catalyst D

Comparative Catalyst D is a single-layered TWC coated on a ceramic substrate (400 cpsi, 4.0 mil wall thickness). The catalyst layer consists of Rh supported on a washcoat of Y-doped La-stabilized alumina and Nd, La-stabilized ceria zirconia where Rh was prefixed on the alumina support. The Y-doped La-stabilized alumina was prepared by a wetness impregnation method by using an aqueous Y nitrate solution. The Y concentration is the same as the following Catalyst Articles 7 to 9. The Rh loading of Comparative Catalyst D is 2.0 g/ft$^3$.

Catalyst Article 7

An intermetallic compound of general formula Al$_{74.8}$-Y$_{25}$-Rh$_{0.2}$ was prepared by using a similar method as described above.

The crushed intermetallic particles were leached in 10 wt% Na$_2$CO$_3$ aqueous solution for 24 hours at room temperature. The leached intermetallic particles were washed with distilled water until a pH~7 was measured. The particles were then dried at 313 K (40 °C) for 12 hours. The leached intermetallic compound particles were used to prepare Catalyst Article 7 having a Rh loading of 2.0 g/ft$^3$ by following a similar method as described above in respect of Catalyst Articles 4 to 6.

Catalyst Article 8

An intermetallic compound of general formula Al$_{74.5}$-Y$_{25.0}$-Rh$_{0.5}$ was prepared by using a similar method as described above.

The crushed intermetallic particles were leached in 10 wt% Na$_2$CO$_3$ aqueous solution for 24 hours at room temperature. The leached intermetallic particles were washed with distilled water until a pH~7 was measured. The particles were then dried at 313 K (40 °C) for 12 hours. The leached intermetallic compound particles were used to prepare Catalyst Article 8 having a Rh loading of 2.0 g/ft$^3$ by following a similar method as described above in respect of Catalyst Articles 4 to 6.

Catalyst Article 9

An intermetallic compound of general formula Al$_{74.0}$-Y$_{25.0}$-Rh$_{1.0}$ was prepared by using a similar method as described above.

The crushed intermetallic particles were leached in 10 wt% Na$_2$CO$_3$ aqueous solution for 24 hours at room temperature. The leached intermetallic particles were washed with distilled water until a pH~7 was measured. The particles were then dried at 313 K (40 °C) for 12 hours. The leached intermetallic compound particles were used to prepare Catalyst Article 9 having a Rh loading of 2.0 g/ft$^3$ by following a similar method as described above in respect of Catalyst Articles 4 to 6.

Light-off test results were obtained for total hydrocarbons, and nitrogen oxides. These results were obtained under the same conditions set out in **Table 2** and by following a similar method as described above. The light-off test results measured after lean aged conditions are shown in **Table 7.** The aging comprises harsh lean aging at 1000°C for 4 hours under air with 10% steam.

**Table 7**

| | Rh Atomic weight percentage | Rh Loading (g/ft³) | Conversion at 600°C (%) | |
|---|---|---|---|---|
| | | | HC | NO$_x$ |
| **Comparative Catalyst D** | | 2.0 | 34.3 | 12.7 |
| **Catalyst Article 7** | 0.2 | 2.0 | 51.9 | 48.1 |
| **Catalyst Article 8** | 0.5 | 2.0 | 71.8 | 48.2 |
| **Catalyst Article 9** | 1.0 | 2.0 | 48.8 | 41.0 |

It can be seen that Catalyst Article 8, with a Rh atomic weight percentage of 0.5, achieved the best total HC conversion. Both Catalyst Article 7 with a Rh atomic weight percentage of 0.2 and Catalyst Article 8, with a Rh atomic weight percentage of 0.5, achieved good NO$_x$ conversions. The atomic weight percentage of Rh in the intermetallic compound (i.e. the value of c in Formula I provided above), may therefore be selected based on its application requirement. For example, if the application of the catalyst article is focussed on HC conversion, a formulation of Catalyst Article 8 may be preferable. If, however, the application of the catalyst article is focussed on NO$_x$ conversion, then a formulation of Catalyst Article 7 may be preferable.

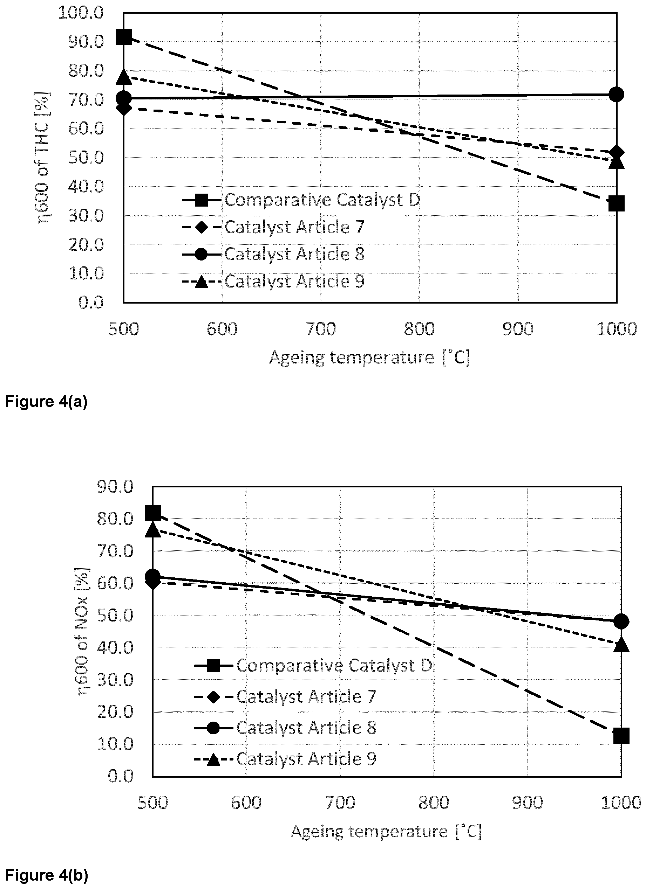

Figures 4(a) and 4(b) also show that Catalyst Article 8, with a Rh atomic weight percentage of 0.5, achieved the best thermal stability during the conversion of total HC over an ageing temperature range of 500°C to 1000°C. Catalyst Articles 7 and 8 displayed similar thermal stabilities during the conversion of NO$_x$ over the aging temperature range of 500°C to 1000°C.

**Claims**

1. A catalyst composition comprising an intermetallic compound, wherein the intermetallic compound comprises:

   a transition metal selected from Fe, Ce, Y, Nb and combinations thereof; and
   a noble metal selected from Pt, Pd, Rh and combinations thereof.

2. The composition according to claim 1, wherein the intermetallic compound has a formula according to Formula I:

   $$Al_a\text{-}X_b\text{-}PGM_c \qquad \text{Formula I}$$

   in which:

   $$a = 100 - b - c;$$

   $$25 \leq a < 80;$$

   $$20 < b < 75;$$

   $$0 < c \leq 5.0$$

   wherein a, b and c are atomic weight percentages;
   wherein X is the transition metal selected from Fe, Ce, Y, Nb and combinations thereof; and
   wherein PGM is the noble metal selected from Pt, Pd, Rh and combinations thereof.

3. The catalyst composition according to claim 1, wherein the intermetallic compound has been leached prior to forming the composition.

4. The catalyst composition according to claim 3, wherein in the intermetallic compound has a BET surface area of about 90-160 m$^2$/g.

5. The catalyst composition according to any preceding claim wherein the transition metal is Y.

6. The catalyst composition according to any preceding claim, wherein the noble metal is Rh.

7. The catalyst composition according to any preceding claim, wherein the composition further comprises from 20 to 50 wt% of an oxygen storage component based on the total weight of the catalyst composition.

8. The catalyst composition according to any preceding claim, wherein the composition further comprises from 50 to 80 wt% of an inorganic oxide based on the total weight of the catalyst composition.

9. A washcoat composition comprising:

   a catalyst composition according to any one of the preceding claims; and
   a liquid medium.

10. A catalyst article comprising a substrate and a catalyst composition according to any one of claims 1 to 8 coated on the substrate.

11. A catalyst article according to claim 10, wherein the catalyst article comprises a single layer of the catalyst composition applied to the channels of the substrate.

12. The catalyst article according to claim 10 or claim 11, wherein the noble metal loading on the catalyst article is from 0.5 to 5.0 g/ft$^3$.

13. The catalyst article according to any one of claims 10 to 12, wherein the catalyst article is a three-way catalyst for treating a flow of a combustion exhaust gas by simultaneously oxidising carbon monoxide and hydrocarbons and reducing nitrogen oxides.

14. A method of preparing a catalyst article according to any one of claims 10 to 13, comprising the step of coating a substrate with a washcoat composition according to claim 9.

15. An emission treatment system for treating a flow of a combustion exhaust gas comprising the catalyst article according to any one of claims 10 to 13.

16. A method of treating an exhaust gas from an internal combustion engine, comprising contacting the exhaust gas with a catalyst article according to any one of claims 10 to 13.

Figure 1(a)

Figure 1(b)

Figure 1(c)

**Figure 2(a)**

**Figure 2(b)**

**η600 of THC**

Figure 3(a)

Figure 3(b)

Figure 4(a)

Figure 4(b)

Europäisches
Patentamt

European
Patent Office

Office européen
des brevets

# EUROPEAN SEARCH REPORT

Application Number

EP 23 15 2222

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 041622 A (TOYOTA MOTOR CORP) 1 March 2012 (2012-03-01) | 1-8 | INV.<br>B01J23/63 |
| Y | * paragraphs [0038] – [0049], [0069] – [0076]; figures 5,6 * | 9-16 | B01J23/89<br>B01J35/04<br>B01J35/10 |
| X | LOUZGUINE-LUZGIN D V ET AL: "Structure and transformation behaviour of a rapidly solidified Al-Y-Ni-Co-Pd alloy", JOURNAL OF ALLOYS AND COMPOUNDS, ELSEVIER SEQUOIA, LAUSANNE, CH, vol. 399, no. 1-2, 16 August 2005 (2005-08-16), pages 78-85, XP027812402, ISSN: 0925-8388 [retrieved on 2005-08-16] * page 79, left-hand column, paragraph 2. * | 1 | B01J37/04<br>B01J37/02<br>B01D53/94<br>B01J21/02<br>C22C21/00<br>C22C38/06<br>C22C5/04<br>C22C3/00 |
| X | DATABASE WPI Week 2020007 Thomson Scientific, London, GB; AN 2020-02695N XP002809670, -& CN 110 635 142 A (UNIV YANSHAN) 31 December 2019 (2019-12-31) * paragraphs [0040] – [0042]; example 1 * | 1 | |
| Y | US 2019/388838 A1 (LUO TIAN [US] ET AL) 26 December 2019 (2019-12-26) * paragraphs [0082] – [0100]; claim 1 * | 9-16 | TECHNICAL FIELDS SEARCHED (IPC)<br>B01J<br>B01D<br>H01M<br>C22C |
| A | US 3 873 472 A (OSHIMA HIROSHI ET AL) 25 March 1975 (1975-03-25) * example 1 * | 1-16 | |

The present search report has been drawn up for all claims

| Place of search | Date of completion of the search | Examiner |
|---|---|---|
| Munich | 3 July 2023 | Beckmann, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                    

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 2222

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2023

| Patent document cited in search report | Publication date | Patent family member(s) | Publication date |
|---|---|---|---|
| JP 2012041622 A | 01-03-2012 | NONE | |
| CN 110635142 A | 31-12-2019 | NONE | |
| US 2019388838 A1 | 26-12-2019 | BR 112019015227 A2 | 14-04-2020 |
| | | CA 3051678 A1 | 02-08-2018 |
| | | CN 110461467 A | 15-11-2019 |
| | | EP 3573753 A1 | 04-12-2019 |
| | | JP 2020508845 A | 26-03-2020 |
| | | KR 20190104072 A | 05-09-2019 |
| | | RU 2019126787 A | 01-03-2021 |
| | | US 2019388838 A1 | 26-12-2019 |
| | | WO 2018138687 A1 | 02-08-2018 |
| | | ZA 201904858 B | 23-12-2020 |
| US 3873472 A | 25-03-1975 | NONE | |

EPO FORM P0459

For more details about this annex : see Official Journal of the European Patent Office, No. 12/82